# DEMANDE DE BREVET EUROPEEN

(11) **EP 1 482 312 A1**
(43) Date de publication de la demande: **01.12.2004**
(21) Numéro de dépôt: 04356081.2
(22) Date de dépôt: 27.05.2004
(51) Int. Cl.: G01P 5/06, G01P 5/07

(54) **Anémomètre**

(30) Priorité: 28.05.2003 FR 0306510
(71) Demandeur: Fitec, 69150 Decines (FR)
(72) Inventeur: Valle, Thierry, 69330 Meyzieu (FR)
(74) Mandataire: Bratel, Gérard

(57) **Abrégé**

L'anémomètre comprend un capteur (2) avec un rotor (3) pourvu de coupelles (5) disposées autour d'un moyeu central (6), et des moyens de détection de la rotation du rotor (3). Le rotor (3) possède une structure monobloc, les coupelles (5) étant réalisées d'un seul tenant avec le moyeu central (6), et étant directement accolées à ce moyeu. Les moyens de détection de la rotation du rotor (3) sont reliés à des moyens d'affichage et/ou de signalisation. Cet anémomètre est utilisable pour la sécurité des grues à tour et des nacelles élévatrices.

## Description

La présente invention concerne un anémomètre, c'est-à-dire un instrument de mesure de la vitesse du vent, du genre de ceux comprenant un capteur avec un rotor pourvu de coupelles disposées autour d'un moyeu central, et avec des moyens de détection de la vitesse de rotation du rotor, représentative de la vitesse du vent, ces moyens de détection pouvant être reliés à des moyens d'affichage et/ou de signalisation. Plus particulièrement, cette invention s'intéresse à un anémomètre utilisable dans le domaine de la sécurité des grues à tour, ou d'autres engins travaillant en hauteur, tels que les nacelles élévatrices de personnes.

De manière généralement connue, un anémomètre comprend un capteur réalisé sous la forme d'un rotor ou d'un moulinet, monté tournant autour d'un axe de rotation vertical, le rotor comportant un moyeu central auquel sont rattachées des coupelles périphériques, habituellement au nombre de trois. Ce rotor est entraîné en rotation par le vent, et sa vitesse de rotation, qui est fonction de la vitesse du vent, est détectée par un dispositif optoélectronique ou électromagnétique, qui fournit des signaux électriques représentatifs de cette vitesse de rotation. Ces signaux sont traités dans une chaîne de mesure, qui permet l'affichage de la vitesse du vent et/ou une signalisation particulière lorsque la vitesse mesurée du vent atteint un certain seuil. L'information relative à la vitesse du vent ou à l'atteinte du seuil peut aussi commander la mise en sécurité automatique d'un appareil ou d'un engin, par exemple la mise hors service d'un engin de levage, ou le repliage automatique d'un store déroulé.

En particulier, les grues à tour sont équipées d'un anémomètre, qui permet d'indiquer au grutier la vitesse instantanée du vent, et surtout de signaler toute vitesse de vent relativement élevée pour laquelle la grue doit être mise hors service et en sécurité (mise en "girouette" de la flèche", conformément aux recommandations ou prescriptions officielles en vigueur.

Dans sa conception traditionnelle, un anémomètre comporte, en ce qui concerne son rotor, trois coupelles réalisées sous forme de pièces indépendantes fixées sur le moyeu central, chaque coupelle étant raccordée à ce moyeu central par une tige radiale, ou un bras radial, plus ou moins long et fin. A titre d'exemples de telles réalisations, il est fait référence aux documents suivants :
FR 2041284, EP 0859245, EP 0877254, US 1560535, US 4543836, WO 02/29420.

Les réalisations actuelles d'anémomètres, telles qu'elles ressortent de ces documents, sont relativement fragiles du point de vue mécanique, en raison notamment des tiges ou bras radiaux qui relient les coupelles au moyeu central. Ces tiges ou bras radiaux peuvent se rompre, ou du moins se tordre, à l'occasion de chocs subis par le rotor de l'anémomètre, ou de rafales de vent très violentes. Le risque de détérioration des rotors d'anémomètres existe, en particulier, dans le cas d'anémomètres subissant des manipulations fréquentes, ce qui est notamment le cas des anémomètres équipant les grues à tour, souvent démontées, transportées et remontées. Il est non seulement évident qu'un anémomètre dont le rotor est détérioré ou détruit ne peut plus assurer sa fonction, mais encore il doit être noté qu'un anémomètre dont le rotor comporte des tiges ou bras radiaux déformés fournira une mesure faussée, éventuellement avec des conséquences plus ou moins graves pour la fonction de sécurité recherchée.

La présente invention vise à remédier à ces inconvénients, en fournissant un anémomètre dont le capteur, en particulier le rotor, est d'une construction mécanique particulièrement robuste, lui conférant notamment la solidité nécessaire lors des manipulations, telles que celles subies dans le cas des grues à tour, tout en conservant une grande sensibilité.

A cet effet, l'invention a pour objet un anémomètre, du genre indiqué en introduction, dans lequel le rotor possède une structure monobloc, avec des coupelles réalisées d'un seul tenant avec le moyeu central, et directement accolées à ce moyeu.

Avantageusement, l'ensemble du rotor, comprenant les coupelles et le moyeu central, est réalisé en matière synthétique, notamment en polyéthylène haute densité. Les coupelles peuvent être formées par usinage, dans la masse, d'un bloc initial de matière synthétique.

Le moyeu central de ce rotor peut être solidarisé avec un corps tournant cylindrique, de diamètre extérieur sensiblement égal à celui de ce moyeu, le corps tournant étant monté rotatif par l'intermédiaire de roulements sur un corps fixe cylindrique, de diamètre extérieur sensiblement égal à celui du corps tournant.

Selon un mode de réalisation possible, les moyens de détection de la vitesse de rotation du rotor comprennent, d'une part, un disque optique à secteurs alternativement clairs et sombres fixé dans la partie inférieure du corps tournant, et d'autre part, au sommet du corps fixe, des moyens optoélectroniques, du genre cellule, sensibles au passage successif des secteurs clairs et sombres du disque optique.

On obtient ainsi un anémomètre dont le rotor possède une forte cohésion et s'avère particulièrement robuste, notamment indéformable et pratiquement incassable, également en raison de l'épaisseur de matière des coupelles, ce qui rend cet anémomètre particulièrement adapté pour toutes les applications dans lesquelles des chocs sont à redouter, notamment au cours des manutentions ou des démontages et remontages. La matière constitutive du rotor rend aussi celui-ci indéformable, imputrescible et inaltérable, ce qui lui garantit une longue durée de vie. Malgré cela, l'anémomètre objet de l'invention conserve une grande sensibilité et une bonne linéarité de mesure, comme l'ont démontré les opérations d'étalonnage effectuées par le Demandeur. A cet égard, il s'est avéré de façon surprenante que le fait d'accoler directement les coupelles au moyeu central du rotor, plutôt que de les éloigner du moyeu en prévoyant des tiges ou bras radiaux de liaison, n'affecte nullement le bon fonctionnement et la précision et sensibilité de l'anémomètre, d'autant plus qu'il en résulte une réduction de l'inertie du rotor qui garantit son démarrage plus rapide, en cas de rafale de vent. Ainsi, ce rotor se met à tourner dès que le vent atteint une vitesse de l'ordre de 3 km/h, malgré sa conception plutôt massive.

La robustesse de cet anémomètre est aussi assurée pour ses composants optiques ou électroniques, compte tenu de la disposition intérieure du disque optique et de la cellule, et de la possibilité d'enrober dans de la résine les composants électroniques et les connexions électriques logées dans le corps fixe cylindrique.

On notera aussi que ce corps fixe cylindrique peut être directement monté au sommet d'un tube-support qui, selon l'utilisation de l'anémomètre, est par exemple fixé par bridage sur la structure d'une grue à tour, ou sur la rambarde d'une nacelle élévatrice. A cet égard, on remarquera que la constitution et le montage de l'anémomètre, objet de l'invention, restent particulièrement simples et ne nécessitent qu'un nombre limité de pièces.

Dans l'ensemble, l'invention fournit ainsi un anémomètre particulièrement adapté à son environnement et à ses conditions d'utilisation.

Par ailleurs, cet anémomètre reste compatible avec toutes possibilités d'affichage, de transmission à distance et de traitement des mesures, telles que :
- affichage sur un indicateur placé dans la cabine de conduite d'une grue ;
- affichage sur un répétiteur placé au pied de la grue, éventuellement sur plusieurs répétiteurs placés en divers points, par exemple dans un local de chantier ;
- visualisation et stockage des mesures sur un micro-ordinateur ;
- transmission à distance des mesures par liaison filaire, par radio, par bus informatique, par liaison téléphonique, etc... ;
- comparaison des mesures avec toutes valeurs de seuil prédéfinies et stockées en mémoire, et déclenchement de divers signaux sonores et/ou lumineux en cas de dépassement des valeurs de seuil, par exemple : signalisation par un voyant sur l'afficheur, par une sonnerie, ou par une sirène et des feux à éclats pour une signalisation extérieure ;
- possibilité d'un affichage simple et direct, dans le cas d'un anémomètre dont le capteur avec rotor est directement monté sur un boîtier avec afficheur ; une telle réalisation, sans report à distance de la mesure, est notamment envisageable pour une utilisation sur les nacelles élévatrices.

L'invention sera mieux comprise à l'aide de la description qui suit, en référence au dessin schématique annexé représentant, à titre d'exemples, quelques formes d'exécution de cet anémomètre :
Figure 1 est une vue en perspective du capteur d'un anémomètre conforme à la présente invention ;
Figure 2 est une vue en coupe verticale de l'anémomètre de la figure 1 ;
Figure 3 est une vue de face du disque optique de cet anémomètre ;
Figure 4 représente, sous forme de schéma synoptique, la chaîne de mesure associée à l'anémomètre, dans le cas de son application à une grue à tour ;
Figure 5 est une vue de face d'un autre anémomètre selon l'invention, plus particulièrement utilisable sur une nacelle élévatrice.

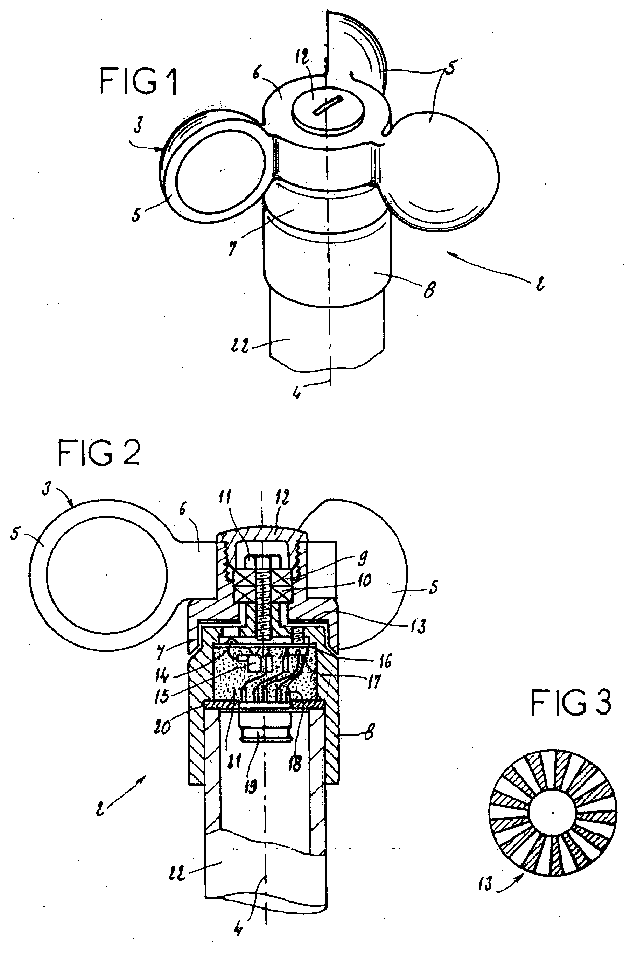

Les figures 1 et 2 représentent, plus particulièrement, la partie "capteur" d'un anémomètre, désignée globalement par le repère 2. Ce capteur comprend lui-même un rotor 3, monté tournant autour d'un axe vertical 4, le rotor 3 étant pourvu de trois coupelles 5 disposées à des intervalles angulaires réguliers de 180°.

Le rotor 3 possède ici une structure monobloc, ses trois coupelles 5 étant réalisées d'un seul tenant avec un moyeu central 6, de forme annulaire. Les trois coupelles 5 sont directement accolées au moyeu central 6.

L'ensemble du rotor 3, comprenant les trois coupelles 5 et le moyeu central 6, est réalisé en matière synthétique, notamment en polyéthylène haute densité. Les formes sensiblement hémisphériques des trois coupelles 5 résultent d'un usinage, dans la masse, d'un bloc initial de matière synthétique, notamment un usinage réalisé sur une machine à commande numérique.

Le moyeu central 6 du rotor 3 est monté sur la partie supérieure d'un corps tournant 7 de forme cylindrique, et de diamètre extérieur sensiblement égal à celui du moyeu 6, le moyeu 6 étant solidarisé avec le corps tournant 7 par un emmanchement serré. Le corps tournant 7 est lui-même monté tournant sur le sommet d'un corps fixe 8 de forme cylindrique, lui aussi de diamètre extérieur sensiblement égal à celui du moyeu 6, donc du corps fixe 8. Le montage rotatif du corps tournant 7 est réalisé par l'intermédiaire de roulements 9 et 10, maintenus par une vis centrale 11 sur le sommet du corps fixe 8. L'ouverture supérieure du corps tournant 7 est obturée par un bouchon vissé 12, lequel dissimule et protège les roulements 9 et 10 et la tête de la vis 11. De même que le rotor 3, le corps tournant 7 et le corps fixe 8 ainsi que le bouchon 12 sont réalisables en matière synthétique.

L'ensemble constitué du corps tournant 7 et du corps fixe 8 renferme un dispositif de détection optique de la vitesse de rotation du rotor 3 autour de l'axe 4. Le dispositif de détection comprend, d'une part, un disque optique 13 fixé dans la partie inférieure du corps tournant 7, ce disque optique 13 présentant une alternance de secteurs clairs et sombres, en particulier blancs et noirs, comme l'illustre la figure 3. Ce dispositif de détection comprend, d'autre part, une cellule optoélectronique 14, placée au sommet du corps fixe 8, face à une petite ouverture de ce dernier. La cellule 14, et d'autres composants électroniques 15 du dispositif de détection, sont montés sur une plaquette de circuit imprimé 16, fixée au moyen d'une vis 17 à l'intérieur du corps fixe 8, sous le sommet de celui-ci.

Le circuit imprimé 16 est raccordé à des connexions 18, réunies en une prise normalisée 19 portée par une rondelle de fermeture 20 du corps fixe 8. Un enrobage de résine 21, contenu dans le corps fixe 8, assure le blocage des composants électroniques 15 et des connexions 18.

L'ensemble du capteur 2, précédemment décrit, est ici monté au sommet d'un tube-support 22 vertical, prévu notamment pour être fixé sur la structure d'une grue à tour, le tube-support 22 étant emmanché dans le corps fixe 8 du capteur 2.

En cours de fonctionnement, le vent agissant sur les coupelles 5 provoque la mise en rotation du rotor 3, ces coupelles 5 captant correctement le vent quelles que soient les conditions d'utilisation, du moment que le capteur 2 est placé en hauteur et à bonne distance de tout élément perturbateur. Le rotor 3, ainsi mis en rotation autour de l'axe vertical 4, provoque lui-même la rotation, autour de cet axe 4, du corps tournant 7 avec son disque optique 13.

A l'intérieur du capteur 2, la rotation du corps tournant 7 est convertie, par le dispositif de détection composé du disque optique 13 et de la cellule 14, en impulsions électriques émises au rythme de l'alternance des secteurs clairs et sombres du disque optique 13 devant la cellule 14. On obtient ainsi un signal impulsionnel S, délivré par la prise 19, la fréquence du signal S étant représentative de la vitesse du vent, et étant en particulier proportionnelle à cette vitesse (dans la mesure où le capteur 2 fournit une réponse "linéaire").

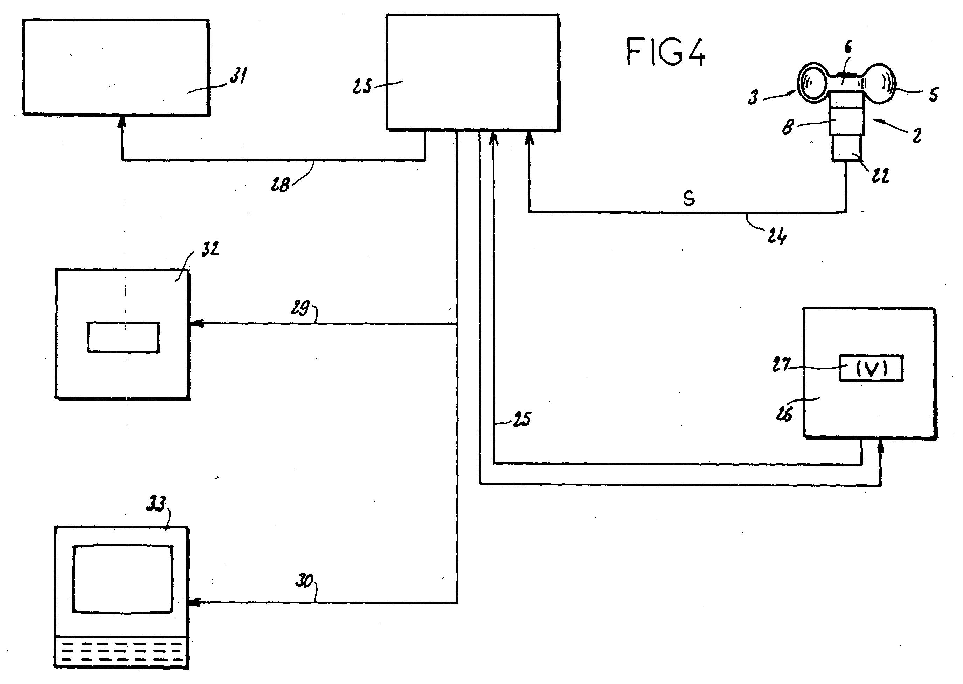

En se référant désormais à la figure 4, on décrira une chaîne de mesure complète, associée au capteur 2 précédemment décrit, en considérant ici un anémomètre appliqué à la sécurité d'une grue à tour.

La chaîne de mesure comprend un module d'alimentation et de répartition 23, qui est relié au capteur 2 par une liaison 24. Le signal impulsionnel S issu du capteur 2 est d'abord acheminé, par la liaison 24, jusqu'au module d'alimentation et de répartition 23, qui d'une part sert à alimenter électriquement les divers organes de la chaîne de mesure de l'anémomètre, et qui d'autre part retransmet le signal impulsionnel S vers les organes appelés à traiter ce signal.

En particulier, le module 23 est relié, par un bus informatique 25, à un afficheur 26 avec écran 27 placé dans la cabine de conduite de la grue concernée, dans le champ de vision du grutier. Le signal impulsionnel S est retransmis par le module 23, et via le bus 25, à l'afficheur 26 qui va traiter ce signal par un micro-contrôleur interne, en le convertissant en une valeur numérique de vitesse de vent V, exprimée notamment en km/h. Cette valeur de vitesse de vent V est affichée sur l'écran 27 de l'afficheur 26.

De plus, toujours dans l'afficheur 26, la valeur de vitesse de vent V est comparée à des valeurs de seuil prédéfinies et stockées en mémoire, afin

De plus, toujours dans l'afficheur 26, la valeur de vitesse de vent V est comparée à des valeurs de seuil prédéfinies et stockées en mémoire, afin de déclencher des signaux lumineux et/ou sonores, par exemple l'éclairement d'un voyant sur la face avant de l'afficheur 26.

Cet afficheur 26 va ensuite constituer et transmettre en retour, sur le bus 25, un message indiquant la vitesse mesurée du vent, et le numéro identifiant l'anémomètre concerné.

Dans l'exemple selon la figure 4, le module d'alimentation et de répartition 23 est encore relié, par des liaisons 28, 29 et 30, respectivement à une signalisation extérieure 31, à un répartiteur 32 et à un micro-ordinateur 33, ces divers organes jouant chacun un rôle particulier :
La signalisation extérieure 31, visuelle (feux à éclats) et/ou sonore (sirène), sert à avertir l'ensemble du chantier d'un danger présent en cas de vent violent.
Le répétiteur 32 possède des fonctions de mesure et d'affichage de la valeur de vitesse de vent V qui sont identiques à celles de l'afficheur 26 placé dans la cabine de la grue. Ce répétiteur 32 est par exemple installé au pied de la grue ; il permet de prévenir le grutier, en cas de conduite de la grue depuis le sol, ou de prévenir d'autres intervenants du chantier, de la vitesse du vent et notamment du dépassement d'un seuil de sécurité.

Sur le même principe, il est possible d'installer d'autres répétiteurs identiques, en différents points plus ou moins éloignés, par exemple dans une cabane de chantier ou dans un bureau.

Le micro-ordinateur 33 est apte à assurer l'affichage des valeurs de vitesse du vent, notamment sous la forme d'une courbe dynamique, ainsi qu'à archiver les différentes valeurs de vitesse de vent et, le cas échéant, à les mettre à disposition pour consultation à distance, notamment par le réseau Internet. Le stockage des différentes valeurs de vent mesurées peut être réalisé dans un enregistreur autonome (non représenté).

Comme on le comprend aisément, la réalisation d'anémomètre décrite jusqu'ici en référence aux figures 1 à 4 repose sur le principe d'un report à distance de la mesure et de l'affichage, ou autre forme d'exploitation, de la vitesse du vent.

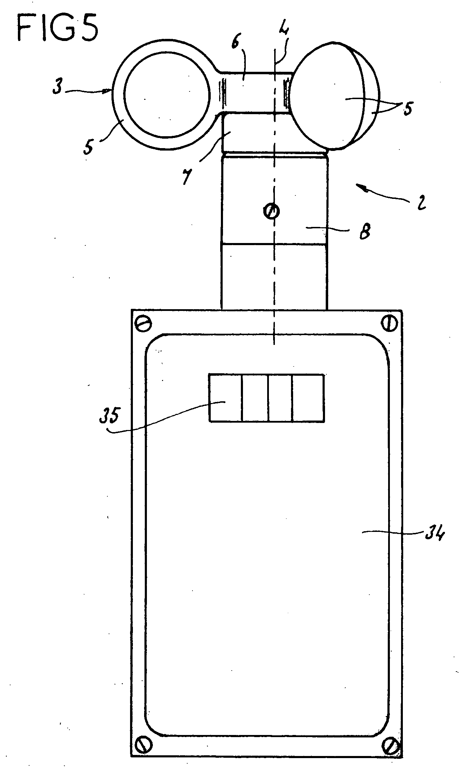

La figure 5 montre une autre réalisation d'anémomètre conforme à l'invention, en ce qui concerne le capteur 2 avec rotor 3, mais dans laquelle ce capteur 2 est monté directement au-dessus d'un boîtier 34 qui possède, d'une part, une fonction d'alimentation et, d'autre part, la fonction de l'afficheur précédemment décrit. La valeur de la vitesse mesurée du vent s'affiche donc ici sur un écran 35 porté par la face avant du boîtier 34. Une telle variante est notamment utilisable sur une nacelle élévatrice.

L'on ne s'éloignerait pas du cadre de l'invention, telle que définie dans les revendications annexées :
- en modifiant les détails constructifs du capteur de l'anémomètre ;
- en changeant les matières constitutives du rotor, ainsi que du corps tournant et du corps fixe du capteur ;
- en formant le rotor par tous procédés appropriés, qu'il s'agisse de moulage ou d'usinage ou d'une combinaison des deux ;
- en remplaçant le dispositif de détection optique de la rotation du rotor par un dispositif de détection d'un autre type, en particulier magnétique, notamment basé sur l'effet Hall ;
- en concevant la chaîne de mesure selon toutes modalités, notamment avec des répétiteurs plus ou moins nombreux, ou en ne mettant en oeuvre que partiellement les diverses fonctions précédemment décrites, et en utilisant tous genres de liaisons, filaires ou sans fil, entre les organes de cette chaîne de mesure ;
- en destinant cet anémomètre à toutes utilisations.

## Revendications

1. Anémomètre, du genre comprenant un capteur (2) avec un rotor (3) pourvu de coupelles (5) disposées autour d'un moyeu central (6), et avec des moyens de détection de la vitesse de rotation du rotor (3), représentative de la vitesse du vent, ces moyens de détection pouvant être reliés à des moyens d'affichage et/ou de signalisation, **caractérisé en ce que** le rotor (3) possède une structure monobloc, avec des coupelles (5) réalisées d'un seul tenant avec le moyeu central (6), et directement accolées à ce moyeu (6).

2. Anémomètre selon la revendication 1, **caractérisé en ce que** l'ensemble du rotor (3), comprenant les coupelles (5) et le moyeu central (6), est réalisé en matière synthétique, notamment en polyéthylène haute densité.

3. Anémomètre selon la revendication 2, **caractérisé en ce que** les coupelles (5) sont réalisées par usinage, dans la masse, d'un bloc initial de matière synthétique.

4. Anémomètre selon l'une quelconque des revendications 1 à 3, **caractérisé en ce que** le moyeu central (6) du rotor (3) est solidarisé avec un corps tournant cylindrique (7), de diamètre extérieur sensiblement égal à celui du moyeu (6), le corps tournant (7) étant monté rotatif par l'intermédiaire de roulements (9, 10) sur un corps fixe cylindrique (8), de diamètre extérieur sensiblement égal à celui du corps tournant (7).

5. Anémomètre selon la revendication 4, **caractérisé en ce que** l'ouverture supérieure du corps tournant (7) est obturée par un bouchon vissé (12), qui dissimule et protège les roulements (9, 10).

6. Anémomètre selon la revendication 4 ou 5, **caractérisé en ce que** son capteur (2) est monté au sommet d'un tube-support (22), emmanché dans le corps fixe (8).

7. Anémomètre selon l'une quelconque des revendications 4 à 6, **caractérisé en ce que** les moyens de détection de la vitesse de rotation du rotor (3) comprennent, d'une part, un disque optique (13) à secteurs alternativement clairs et sombres fixé dans la partie inférieure du corps tournant (7), et d'autre part, au sommet du corps fixe (8), des moyens optoélectroniques, du genre cellule (14), sensibles au passage successif des secteurs clairs et sombres du disque optique (13).

8. Anémomètre selon la revendication 7, **caractérisé en ce que** la cellule (14), et d'autres composants électroniques (15) du dispositif de détection sont montés sur une plaquette de circuit imprimé (16) fixée à l'intérieur du corps fixe (8), le circuit imprimé (16) étant raccordé à des connexions (18) réunies en une prise normalisée (19), et un enrobage de résine (21), contenu dans le corps fixe (8), assurant le blocage des composants électroniques (15) et des connexions (18), la prise (19) délivrant un signal impulsionnel (S) dont la fréquence est représentative de la vitesse du vent.

9. Anémomètre selon l'une quelconque des revendications 1 à 7, **caractérisé en ce qu'**il est appliqué à la sécurité d'une grue à tour, et **en ce qu'**est associée, à son capteur (2), une chaîne de mesure qui comprend un module d'alimentation et de répartition (23) relié au capteur (2), ainsi qu'à un afficheur (26) placé dans la cabine de conduite de la grue concernée, et à une signalisation extérieure (31 ), visuelle et/ou sonore.

10. Anémomètre selon la revendication 8, **caractérisée en ce que** le module d'alimentation et de répartition (23) est relié aussi à au moins un répétiteur (32), par exemple installé au pied de la grue.

11. Anémomètre selon la revendication 8 ou 9, **caractérisé en ce que** le module d'alimentation et de répartition (23) est relié aussi à un micro-ordinateur (33) apte à assurer l'affichage des valeurs de vitesse du vent, ainsi qu'à archiver les différentes valeurs de vitesse de vent.

12. Anémomètre selon l'une quelconque des revendications 1 à 7, **caractérisé en ce que** son capteur (2) avec rotor (3) est monté directement au-dessus d'un boîtier (34) à fonction d'alimentation et d'afficheur, notamment pour une utilisation sur une nacelle élévatrice.
